Europäisches Patentamt

European Patent Office

Office européen des brevets

(11) Numéro de publication : **0 159 235 B1**

# FASCICULE DE BREVET EUROPÉEN

(45) Date de publication du fascicule du brevet :
25.05.88

(21) Numéro de dépôt : 85400514.7

(22) Date de dépôt : 18.03.85

(51) Int. Cl.⁴ : **B 01 J 8/24**, B 01 J 8/44//
F23C11/02

(54) Dispositif de mise en fluidisation.

(30) Priorité : 20.03.84 FR 8404272

(43) Date de publication de la demande :
23.10.85 Bulletin 85/43

(45) Mention de la délivrance du brevet :
25.05.88 Bulletin.88/21

(84) Etats contractants désignés :
AT BE CH DE FR GB IT LI NL SE

(56) Documents cités :
FR-A- 2 148 897
GB-A- 1 111 097
GB-A- 1 346 168
US-A- 2 812 592

(73) Titulaire : FRAMATOME ET CIE.
Tour Fiat 1, Place de la Coupole
F-92400 Courbevoie (FR)

(72) Inventeur : Morin, Jean Xavier
9 B rue de Nevers
F-71200 Le Creusot (FR)

(74) Mandataire : Bressand, Georges et al
c/o CABINET LAVOIX 2 Place d'Estienne d'Orves
F-75441 Paris Cedex 09 (FR)

## Description

La présente invention a pour objet un dispositif de mise en fluidisation s'appliquant plus particulièrement aux lits fluidisés industriels de traitement de matières.

Les chambres de fluidisation pour le traitement de matières comportent à la base un dispositif pour la répartition d'un fluide gazeux sur toute la section de la chambre et pour la mise en fluidisation d'une matière particulaire amenée dans ladite chambre.

Dans le cadre des lits fluidisés industriels de traitement de matières, il est connu d'utiliser, comme dispositif de mise en fluidisation, des plaques planes qui sont perforées de façon à former un réseau régulier et qui sont munies, soit de tubulures surmontées d'un chapeau en forme de champignon, soit de tubulures épaisses percées de trous radiaux. Ce système présente l'avantage de pouvoir se prémunir contre les introductions de particules solides dans la conduite principale de distribution du fluide gazeux. Par contre, ce mode de construction, où la plaque doit résister à des charges thermiques et mécaniques importantes par sa rigidité à la flexion et où la réalisation de multiples champignons est nécessaire, conduit à des coûts de réalisation élevés.

Il est également connu d'utiliser, comme dispositif de mise en fluidisation, des plaques planes, qui sont perforées et munies de venturi. Mais pour se prémunir des introductions de particules solides dans les conduits d'amenée, un siphon d'introduction d'agent de fluidisation doit être aménagé. Il faut alors vérifier régulièrement si le venturi est bouché ou non par des particules, ce qui impose l'alimentation individuelle de chaque venturi en agent de fluidisation. Ce mode de construction conduit donc à la multiplication d'organes d'équilibrage, d'isolement et de décolmatage ce qui entraîne des pertes de charges importantes.

Par ailleurs, ces dispositifs fonctionnent, soit en lit dense, soit en lit circulant, et ils ne permettent pas de passer d'un domaine de fluidisation à l'autre avec le même appareillage. A cet effet, on connaît un dispositif de mise en fluidisation formé par une grille qui comporte un premier ensemble de canaux raccordés à un système d'alimentation en fluide gazeux et un second ensemble de canaux complémentaires raccordés à un autre système d'alimentation en fluide gazeux. Les deux ensembles sont alimentés séparément ou simultanément en fonction du mode de fluidisation que l'on désire obtenir. Cette double disposition a pour conséquence de multiplier les organes de contrôle et de commande, et d'augmenter les coûts de réalisation.

L'invention concerne donc un dispositif de mise en fluidisation pour le traitement industriel de matières qui est particulièrement simple à réaliser et très économique et qui permet d'éviter les inconvénients précités tout en possédant une grande souplesse de fonctionnement.

Suivant l'invention, le dispositif de mise en fluidisation d'une matière particulaire disposé à la base d'une chambre de fluidisation comportant des moyens de répartition d'un fluide gazeux formés par des petits tubes parallèles munis de perforations radiales et raccordés a des collecteurs est caractérisé par le fait que les petits tubes étant en forme de « L » incliné par rapport à l'horizontale sont répartis selon plusieurs rangées parallèles transversalement par rapport à des collecteurs disposés dans la chambre de fluidisation et s'imbriquent les uns dans les autres selon un pas déterminé pour une répartition uniforme du fluide gazeux à la base de la chambre de fluidisation et pour couvrir toute la surface dudit lit fluidisé.

Suivant une autre caractéristique de l'invention, le dispositif est réalisé sous la forme de plusieurs modules juxtaposés les uns à côté des autres sur le fond de la chambre et comportant chacun un ensemble de collecteurs sur lesquels sont montés les petits tubes.

Les caractéristiques de l'invention ressortiront plus particulièrement de la description suivante, donnée à titre d'exemple, et en se référant aux dessins annexés sur lesquels :

- la figure 1 représente une vue partielle en coupe verticale d'une chambre de fluidisation munie du dispositif de mise en fluidisation.
- la figure 2 représente une vue de dessus de la figure 1,
- la figure 3 représente une vue à plus grande échelle en coupe transversale d'un tube du dispositif de mise en fluidisation,
- la figure 4 représente une vue partielle en coupe verticale d'un mode de réalisation du dispositif de mise en fluidisation conforme à l'invention.
- la figure 5 est une vue de dessus de la figure 4,
- et les figures 6 à 8 représentent plusieurs autres modes de réalisation du dispositif de mise en fluidisation.

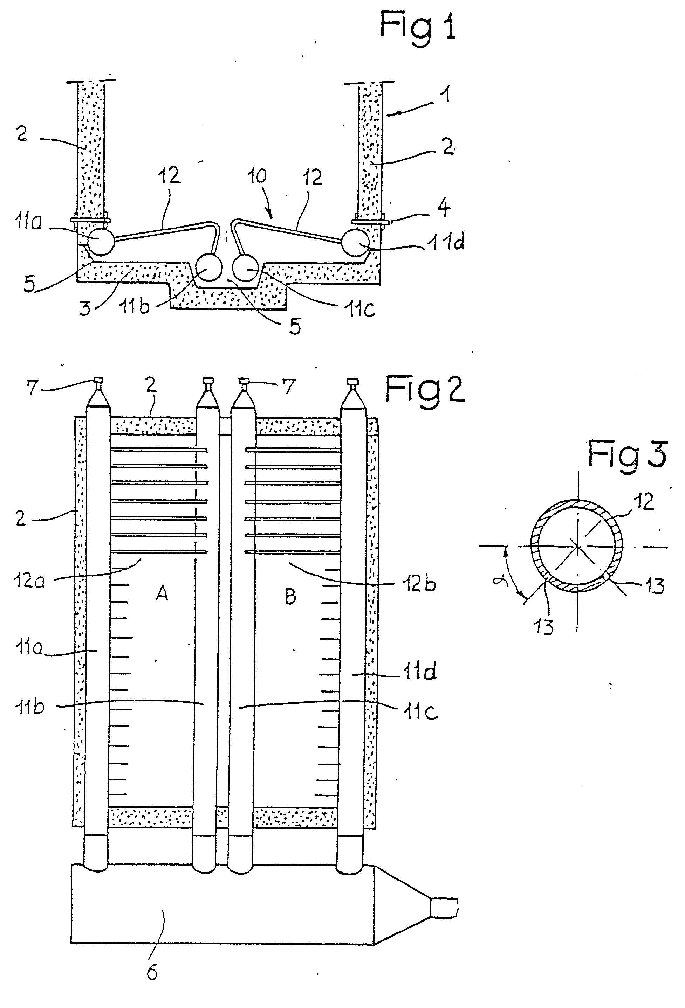

En se reportant tout d'abord aux figures 1 et 2, on a représenté une chambre de fluidisation 1 pour le traitement industriel de matières particulaires ayant une forme parallélépipédique, et comportant des parois latérales 2 en matériau réfractaire et un fond 3 également en matériau réfractaire. Ce fond 3 est relié aux parois latérales 2 par exemple par des brides de liaison 4 facilement démontables.

A la base de la chambre 1 et au-dessus du fond 3, est installé le dispositif de mise en fluidisation 10. Ce dispositif comporte des moyens d'amenée d'un fluide gazeux, par exemple de l'air, formés de plusieurs collecteurs (11a, 11b...) parallèles entre eux et traversant de part en part la chambre 1. Ils sont répartis sur le fond 3 de telle façon qu'un collecteur (11a-11d) soit disposé latéralement de chaque côté de la chambre 1 et que deux

autres collecteurs (11b-11c) soient placés au centre de ladite chambre. De plus, ils sont insérés dans des logements 5 prévus à l'intérieur des parois réfractaires (2-3) de la chambre 1, ce qui les protège des dommages d'érosion et de corrosion provoqués par la matière particulaire.

A l'extérieur de la chambre 1, chaque collecteur 11 est raccordé d'un côté à une conduite principale 6 de distribution du fluide gazeux et comporte de l'autre côté une vanne 7. Cette conduite principale 6 peut être placée à une certaine distance de la chambre 1 ou directement plaquée sur celle-ci afin de réduire les pertes de charge et de diminuer l'encombrement de celle-ci. Elle peut également être raccordée directement à un ventilateur, non représenté, pour l'alimentation en fluide gazeux.

Pour la répartition uniforme du fluide gazeux à la base de la chambre 1 et pour couvrir toute la surface du lit fluidisé, le dispositif de mise en fluidisation comporte une pluralité de petits tubes 12 parallèles les uns par rapport aux autres et disposés transversalement aux collecteurs (11a, 11b...). Les tubes 12 sont raccordés aux collecteurs selon deux rangées parallèles A-B de telle façon que les tubes 12a de la rampe A soient raccordés aux collecteurs (11a-11b) et que les tubes 12b de la rangée B soient raccordés aux collecteurs (11c-11d).

Chaque petit tube 12 est muni de perforations radiales 13 (figure 3) espacées sur la longueur selon un pas défini en fonction du mode de fluidisation désiré. Ces perforations 13 sont dirigées vers le bas de la chambre de fluidisation 1 suivant un angle « α » compris entre 30° et 60° par rapport à l'horizontale de façon à se prémunir des introductions éventuelles de particules solides. D'autre part, ces perforations 13 peuvent être agencées par paires sur la section du tube 12 ou en quinconce.

L'espacement entre chaque tube 12 est réalisé selon un pas défini par le mode de fluidisation désiré. Les tubes 12 sont d'une part en forme de « L » pour assurer leur libre dilatation sous l'effet simultané de la circulation du fluide gazeux et de la matière particulaire, et d'autre part légèrement inclinés par rapport à l'horizontale pour l'évacuation par gravité des particules solides qui peuvent éventuellement s'introduire.

La disposition des collecteurs (11a, 11b...), de chaque côté et au centre de la chambre de fluidisation 1 permet de limiter la longueur des tubes 12 pour se prémunir des effets du flambage axial et des vibrations, et également d'assurer une alimentation en boucle desdits tubes de fluidisation, afin de réduire les différences de pression entre les perforations 13 situées sur les tubes les plus éloignés et par conséquent de diminuer les écarts dans les débits introduits.

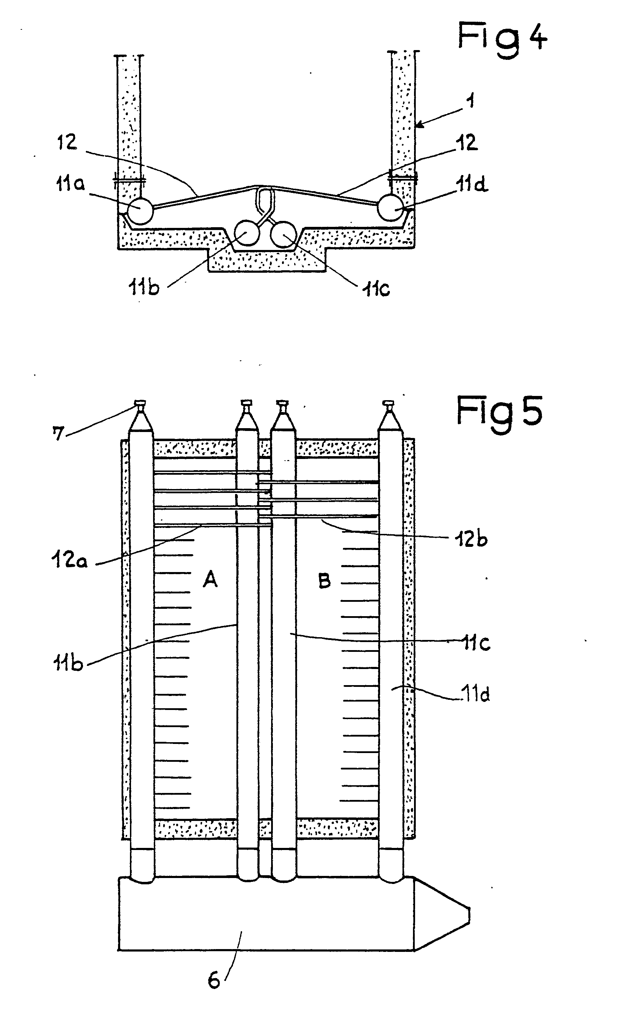

Sur les figures 4 et 5, qui représentent un autre mode de réalisation et sur lesquelles on retrouve la chambre de fluidisation 1 et les collecteurs (11a, 11b...), la disposition des tubes 12 est différente. En effet, les tubes 12 de chaque rangée A-B sont imbriqués les uns dans les autres ce qui permet d'améliorer la répartition uniforme du fluide gazeux à la base de la chambre de fluidisation. Il est également possible de raccorder les tubes 12a de la rangée A aux collecteurs 11a et 11c et les tubes 12b aux collecteurs 11b et 11d.

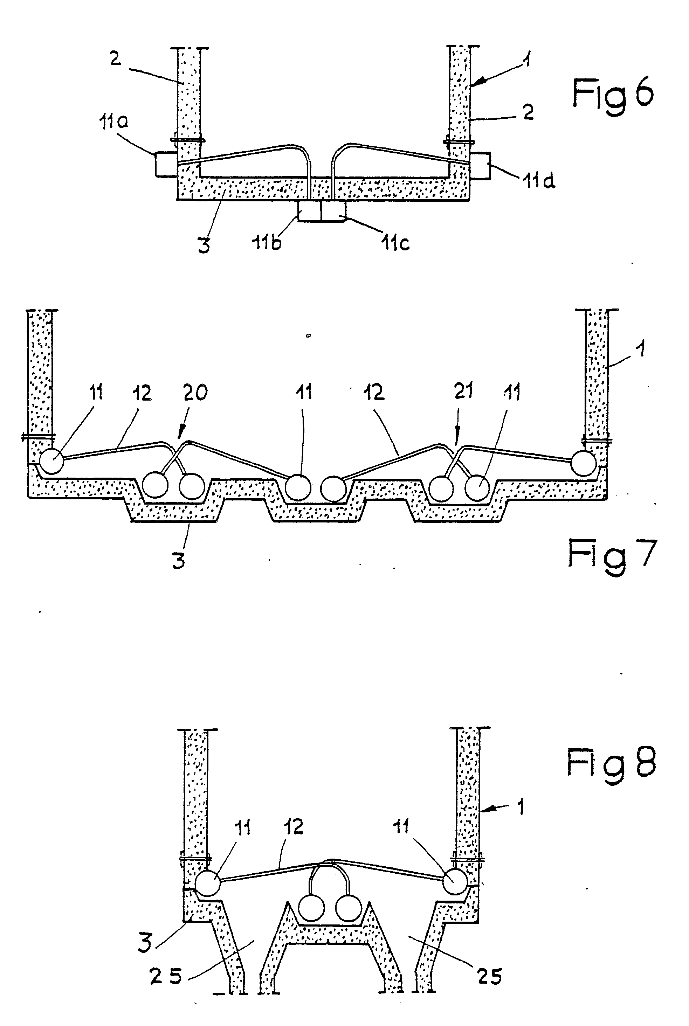

A la figure 6, les collecteurs (11a-11b...) sont disposés à l'extérieur des parois de la chambre de fluidisation 1, permettant ainsi d'obtenir une meilleure protection desdits collecteurs à l'érosion et à la corrosion de la matière particulaire du lit fluidisé.

Dans le cas où la surface de la chambre 1 est particulièrement grande (figure 7) le dispositif de mise en fluidisation peut être réalisé sous la forme de plusieurs modules (20-21) juxtaposés les uns à côté des autres sur le fond 3 de la chambre et comportant chacun un ensemble de collecteurs 11 et de petits tubes 12.

Pour l'évacuation sous le lit fluidisé de grosses particules ou d'objets incombustibles qui ont été introduits avec le combustible, le fond 3 de la chambre de fluidisation 1 peut comporter plusieurs points d'évacuation 25 uniformément répartis et agencés en forme de trémies (figure 8).

Le dispositif de mise en fluidisation décrit ci-dessus sous différentes formes de réalisation, présente de nombreux avantages. Tout d'abord, il est simple à réaliser et très économique en évitant l'utilisation d'une plaque support perforée en matériau sophistiqué, tout en obtenant une répartition uniforme de l'agent de fluidisation.

D'autre part, l'agencement des tubes est tel qu'il permet de récupérer par gravité dans les collecteurs, les particules introduites dans les perforations des tubes. Dans ces collecteurs, les particules sont évacuées périodiquement en ouvrant les vannes 7.

Cette disposition permet également de réduire au minimum la couche de réfractaire isolant constituant le fond du lit fluidisé, le matériau du lit constituant alors partiellement le réfractaire isolant. Enfin, le démontage aisé du fond de la chambre de fluidisation permet d'accéder facilement aux collecteurs et aux tubes et de procéder à d'éventuelles remises en état.

L'invention n'est pas strictement limitée aux modes de réalisation qui ont été décrits à titre d'exemple, mais elle couvre également les réalisations qui n'en différeraient que par des détails, par des variantes d'exécution ou par des moyens équivalents.

**Revendications**

1. Dispositif de mise en fluidisation d'une matière particulaire disposé à la base d'une chambre de fluidisation comportant des moyens de répartition d'un fluide gazeux formés par des petits tubes parallèles munis de perforations radiales et raccordés a des collecteurs, caractérisé par le fait que les petits tubes (12) étant en forme de « L » incliné par rapport à l'horizontale sont répartis selon plusieurs rangées parallèles (A, B) transversalement par rapport à des collecteurs (11a 11b ...) disposés dans la chambre de fluidisation et s'imbriquent les uns dans les autres selon un pas déterminé pour une répartition uniforme du fluide gazeux à la base de la chambre de fluidisation (1) et pour couvrir toute la surface dudit lit fluidisé.

2. Dispositif selon la revendication 1, caractérisé par le fait que le dispositif est réalisé sous la forme de plusieurs modules (20, 21) juxtaposés les uns à côté des autres sur le fond (3) de la chambre (1) et comportant chacun un ensemble de collecteurs (11a, 11b,...) sur lesquels sont montés les petits tubes (12).

## Claims

1. A fluidization device for a particulate material disposed at the base of a fluidization chamber comprising means for the distribution of a gaseous fluid formed by small parallel tubes provided with radial perforations and joined to manifolds, characterised in that the small tubes (12) having an inclined « L » shape in relation to the horizontal, are distributed along several parallel rows (A, B) transversely in relation to the manifolds (11a, 11b) disposed in the fluidization chamber and are imbricated in each other according to a pitch determined for an even distribution of the gaseous fluid at the base of the fluidization chamber (1) and for covering the whole area of the said fluidized bed.

2. A device according to Claim 1 characterised in that the device is made in the form of several modules (20, 21) juxtaposed side by side on the bottom (3) of the chamber (1) and each comprising a set of manifolds (11a, 11b) whereon the small tubes (12) are mounted.

## Patentansprüche

1. Vorrichtung zur Fluidisierung eines in Partikelform vorliegenden Stoffes, die am Boden einer Fluidisierungskammer angeordnet ist, die Organe zur Verteilung eines gasförmigen Fluids aufweist, die aus kleinen parallelen Rohren bestehen, die mit radialen Perforierungen versehen sind und an Kollektoren angeschlossen sind, dadurch gekennzeichnet, daß die kleinen Rohre (12) L-förmig und gegenüber der Horizontalen geneigt sind und in mehreren parallelen Reihen (A, B) quer im Verhältnis zu den Kollektoren (11a, 11b, ...) in der Fluidisierungskammer angeordnet sind und sich gegenseitig mit einer vorgegebenen Schrittweite überlappen, für eine gleichmäßige Verteilung des gasförmigen Fluids am Boden der Fluidisierungskammer (1) und um die ganze Fläche des fluidisierten Bettes zu bedecken.

2. Vorrichtung nach Anspruch 1, dadurch gekennzeichnet, daß die Vorrichtung aus mehreren am Boden (3) der Kammer (1) nebeneinander angeordneten Modulen (20, 21) besteht, die jeder eine Kollektorgruppe (11a, 11b,...) aufweist, auf denen die kleinen Rohre (12) angeordnet sind.

Fig 1

Fig 2

Fig 3

**Fig 4**

**Fig 5**

Fig 6

Fig 7

Fig 8